# EUROPÄISCHE PATENTSCHRIFT

(11) **EP 2 292 497 B1**
(45) Veröffentlichungstag und Bekanntmachung des Hinweises auf die Patenterteilung: **10.09.2014**
(21) Anmeldenummer: 10008354.2
(22) Anmeldetag: 11.08.2010
(51) Int. Cl.: B62D 15/02, B60Q 1/48, G08G 1/16

(54) **Verfahren zum Durchführen eines zumindest semi-autonomen Parkvorgangs eines Kraftfahrzeugs, Fahrerassistenzeinrichtung und Kraftfahrzeug mit einer Fahrerassistenzeinrichtung**
Method for executing a parking process for a motor vehicle which is at least semi-automatic, driver assistance device and motor vehicle with a driver assistance device
Procédé d'exécution d'au moins un processus de stationnement semi-autonome d'un véhicule automobile, dispositif d'assistance du conducteur et véhicule automobile doté d'un dispositif d'assistance du conducteur

(30) Priorität: 07.09.2009 DE 102009040372
(43) Veröffentlichungstag der Anmeldung: 09.03.2011
(73) Patentinhaber: Valeo Schalter und Sensoren GmbH, 74321 Bietigheim-Bissingen (DE); Volkswagen Aktiengesellschaft, 38440 Wolfsburg (DE)
(72) Erfinder: Jecker, Nicolas, 73730 Esslingen (DE); Grimm, Oliver, 74223 Flein (DE); Geiger, Tobias, 74321 Bietigheim-Bissingen (DE); Hüger, Philipp, 38448 Wolfsburg (DE); Wuttke, Ulrich, 38126 Braunschweig (DE)

(56) Entgegenhaltungen:
- EP-A1- 1 950 097
- EP-A1- 2 060 465
- WO-A1-2008/099809
- WO-A1-2008/108243
- WO-A1-2008/140104
- WO-A1-2009/060663

## Beschreibung

Die Erfindung bezieht sich auf ein Verfahren zum Durchführen eines zumindest semi-autonomen Parkvorgangs eines Kraftfahrzeugs mittels einer Fahrerassistenzeinrichtung. Die Erfindung betrifft auch eine Fahrerassistenzeinrichtung zum Durchführen eines zumindest semi-autonomen Parkvorgangs eines Kraftfahrzeugs. Die Fahrerassistenzeinrichtung umfasst eine Sensoreinrichtung zum Erfassen einer Parklücke während einer Vorbeifahrt des Kraftfahrzeugs an der Parklücke. Die Fahrerassistenzeinrichtung umfasst auch eine Steuereinrichtung zum Bestimmen einer Parkbahn für den Parkvorgang. Die Erfindung bezieht sich außerdem auf ein Kraftfahrzeug mit einer solchen Fahrerassistenzeinrichtung.

Parkhilfesysteme zum Unterstützen des Fahrers eines Kraftfahrzeugs beim Durchführen von Parkvorgängen sind in vielfältiger Ausgestaltung aus dem Stand der Technik bekannt. Zum Beispiel beschreibt die Druckschrift DE 10 2006 052 575 A1 einen Parklenkassistenten sowie ein Verfahren zum Unterstützen des Einparkens eines Kraftfahrzeugs. Während einer Vorbeifahrt des Kraftfahrzeugs an einer Querparklücke wird selbige durch einen seitlich am Kraftfahrzeug angebrachten Ultraschallsensor erfasst. Abhängig von der Breite der Querparklücke wird dann eine passende Parkbahn errechnet, entlang welcher das Kraftfahrzeug in die Querparklücke rückwärts eingefahren wird.

Im Stand der Technik ergibt sich folgende Problematik: Der Parkvorgang wird sofort freigegeben, sobald die Parklücke erkannt wird und irgendeine Parkbahn durch das Fahrerassistenzsystem errechnet werden kann. Es kann somit vorkommen, dass unmittelbar nach dem Erkennen einer Parklücke durch das Fahrerassistenzsystem der Fahrer dazu aufgefordert wird, das Kraftfahrzeug abzubremsen und den Parkvorgang einzuleiten, weil irgendeine Parkbahn berechenbar ist. Unmittelbar nach dem Erkennen der Parklücke kann sich das Kraftfahrzeug jedoch in einer ungünstigen Position relativ zur Parklücke befinden, so dass das semi-autonome Einparken lediglich mit einer drei- oder noch mehrzügigen Parkbahn oder auch mit einer für einen Fahrer ganz ungewöhnlichen Parkbahn durchgeführt werden kann. Wird das Kraftfahrzeug unmittelbar dann gestoppt, wenn irgendeine Parkbahn berechenbar ist, und wird das Kraftfahrzeug in die Parklücke mit mehr als drei Zügen eingeparkt, so ergibt sich bei dem Einparken auch eine entsprechend große Ausscherweite des Kraftfahrzeugs. Nicht zuletzt hat eine zu frühe Freigabe des Parkvorgangs unmittelbar nach dem Erkennen einer Parklücke den Nachteil, dass das Kraftfahrzeug nur entlang einer für den Fahrer ungewöhnlichen und somit für den Fahrer subjektiv schlechten Parkbahn in die Parklücke eingeparkt werden kann. So kann sich eine solche Parkbahn für das zumindest semi-autonome Einparken ergeben, die der Fahrer selbst mit dem Kraftfahrzeug niemals überfahren würde.

WO 2008/108243 A1 ist als nächstliegender Stand der Technik nach dem Oberbegriff des Anspruchs 1 zu sehen und offenbart eine Parkassistenzvorrichtung zum Führen eines Fahrzeugs zu einer Zielparkposition, insbesondere rückwärts in eine Querparklücke. Die Parkassistenzvorrichtung hat Anfangspositionsführungsmittel zum Erzeugen, zu einem vorbestimmten Zeitpunkt, einer Anfangspositionsführungsroute, die von der aktuellen Position des Fahrzeugs zu einer Anfangsposition führt, bei der die Führung des Fahrzeugs zu der Zielparkposition beginnt und Führen des Fahrzeugs, so dass es sich entlang der Führungsroute bewegt.

Es ist Aufgabe der Erfindung eine Lösung aufzuzeigen, wie ein zumindest semiautonomer Parkvorgang eines Kraftfahrzeugs besonders benutzerfreundlich durchgeführt werden kann.

Diese Aufgabe wird erfindungsgemäß durch ein Verfahren mit den Merkmalen gemäß Patentanspruch 1, durch eine Fahrerassistenzeinrichtung mit den Merkmalen gemäß Patentanspruch 11, wie auch durch ein Kraftfahrzeug mit den Merkmalen gemäß Patentanspruch 12 gelöst. Vorteilhafte Ausführungen der Erfindung sind Gegenstand der abhängigen Patentansprüche und der Beschreibung.

Ein erfindungsgemäßes Verfahren ist zum Durchführen eines zumindest semi-autonomen Parkvorgangs eines Kraftfahrzeugs mittels einer Fahrerassistenzeinrichtung ausgelegt. Als Parkvorgang wird ein Rückwärtseinparken des Kraftfahrzeugs in eine Parklücke durchgeführt. Es wird eine Parklücke durch eine Sensoreinrichtung der Fahrerassistenzeinrichtung während einer Vorbeifahrt des Kraftfahrzeugs an der Parklücke erfasst. Eine Steuereinrichtung der Fahrerassistenzeinrichtung bestimmt in Abhängigkeit von der erfassten Parklücke einen Bereich für eine Startposition für das Kraftfahrzeug, von welchem aus eine Parkbahn bestimmbar ist, die zumindest einem vorbestimmten Kriterium genügt. Der Parkvorgang wird dann freigegeben, wenn sich ein vorbestimmter Referenzpunkt des Kraftfahrzeugs innerhalb des bestimmten Bereichs befindet.

Es wird somit erfindungsgemäß ein Bereich in Abhängigkeit von der erfassten Parklücke bestimmt, aus welchem heraus eine vorbestimmte Parkbahn - das heißt eine Parkbahn, die zumindest einem vorbestimmten Kriterium entspricht - berechnet werden kann. Der Parkvorgang wird somit nicht wie im Stand der Technik sofort nach dem Erfassen der Parklücke freigegeben, sondern erst dann, wenn sich der vorbestimmte Referenzpunkt des Kraftfahrzeugs innerhalb des berechneten Bereichs befindet. Es wird auf diesem Wege sichergestellt, dass nicht wie im Stand der Technik irgendeine Parkbahn, sondern eine solche Parkbahn für den Parkvorgang berechnet werden kann, die einem festgelegten Kriterium genügt und somit für einen benutzerfreundlichen Parkvorgang sorgt.

In einer Verwirklichung der Erfindung kann somit ein Parkvorgang derart erfolgen: Ein Fahrer fährt mit seinem Personenkraftwagen über eine Straße. An die Straße grenzen eine Vielzahl von Querparklücken an, von denen eine Parklücke frei ist. Der Fahrer fährt mit dem Personenkraftwagen an der Parklücke vorbei, und eine Sensoreinrichtung erfasst die Parklücke, nämlich zum Beispiel mit einem an einer Seitenflanke des Personenkraftwagens angebrachten Ultraschallsensor. Die Sensoreinrichtung erfasst dabei eine Breite der Parklücke, wie auch eine Position der Parklücke relativ zu einem Referenzpunkt des Personenkraftwagens. Ist die Parklücke erfasst, so berechnet eine Steuereinrichtung abhängig von der Breite der Parklücke sowie abhängig von ihrer Position einen Bereich für die Startposition des Personenkraftwagens. Die Position des berechneten Bereichs wird bezüglich der Parklücke festgelegt. Aus diesem Bereich heraus kann dann eine Parkbahn berechnet werden beziehungsweise der Personenkraftwagen das Überfahren einer solchen Parkbahn beginnen, die zum Beispiel ein einzügiges Einparken in die Parklücke gewährleistet. Es wird also ein solcher Bereich durch die Steuereinrichtung bestimmt, von welchem aus das Befahren einer solchen Parkbahn begonnen werden kann, mit welcher der Personenkraftwagen einzügig in die Parklücke eingeparkt werden kann. Die Steuereinrichtung gibt nach dem Erfassen der Parklücke und nach dem Berechnen des Bereichs den Parkvorgang noch nicht frei. Der Fahrer fährt mit dem Personenkraftwagen noch weiter, nämlich bis der Referenzpunkt des Personenkraftwagens - zum Beispiel ein Mittelpunkt einer hinteren Achse des Personenkraftwagens - in den bestimmten Bereich gelangt. Tritt der Referenzpunkt des Personenkraftwagens in den berechneten Bereich ein, so wird der Parkvorgang freigegeben. Die Fahrerassistenzeinrichtung kann in die Lenkung des Personenkraftwagens eingreifen, und der Fahrer kann lediglich bremsen und Gas geben.

Das Bestimmen des Bereichs für die Startposition umfasst bevorzugt, dass die geometrische Form des Bereichs und/oder seine Größe und/oder seine Position relativ zur Parklücke bestimmt wird/werden. Der Bereich wird bevorzugt unabhängig von der jeweils augenblicklichen Position des Kraftfahrzeugs bestimmt, das heißt die Position des Bereichs und/oder seine Größe und/oder seine geometrische Form kann/können unabhängig von der jeweils momentanen Position des Kraftfahrzeugs bestimmt werden. Der Bereich - das heißt seine Position relativ zur Parklücke und/oder seine Größe und/oder seine geometrische Form - wird bevorzugt nur abhängig von der erfassten Parklücke, nämlich insbesondere abhängig von deren Breite bestimmt.

Bei einem semi-autonomen Parkvorgang ist es dem Fahrer zugeteilt, dass er Gas gibt und bremst. Ein Lenken und somit ein Einschlagen der lenkbaren Räder des Kraftfahrzeugs wird automatisch und somit fahrerunabhängig durchgeführt oder das Lenken wird durch den Fahrer durchgeführt und die elektronische Fahrerassistenzeinrichtung informiert auf Grundlage einer von dem System bestimmten Parkbahn den Fahrer durch akustische und/oder optische und/oder haptisch wahrnehmbare Signale, welche Lenkaktionen er auszuführen hat. Bei einem autonomen beziehungsweise vollständig automatischen Parkvorgang greift die Fahrerassistenzeinrichtung zusätzlich noch in einen Antriebsstrang des Kraftfahrzeugs, der Fahrer muss lediglich den Parkvorgang freigeben und gegebenenfalls unterbrechen.

Das Kraftfahrzeug wird in eine Querparklücke eingeparkt. Unter einer Querparklücke wird eine derartige seitlich zu einer Fahrbahn angrenzende Abstellfläche für ein Kraftfahrzeug verstanden, deren Längsachse in einem Winkel größer 0° und kleiner 180° zur Längsachse der Fahrbahn orientiert ist. Vorzugsweise werden diesbezüglich Abstellflächen verstanden, deren Längsachse in einem Winkel zwischen 30° und 150° zur Längsachse der Fahrbahn verläuft. Insbesondere seien als Parklücken derartige genannt, deren Längsachse senkrecht zur Längsachse der Fahrbahn orientiert ist.

Der Parkvorgang wird also erst dann freigegeben, wenn sich der vorbestimmte Referenzpunkt des Kraftfahrzeugs bereits innerhalb des bestimmten Bereichs befindet. Auch die Parkbahn für den Parkvorgang, die durch das Kraftfahrzeug beim zumindest semi-autonomen Einparken überfahren wird, kann erst dann durch die Steuereinrichtung berechnet werden, wenn sich der Referenzpunkt des Kraftfahrzeugs innerhalb des bestimmten Bereichs befindet. Bei der Berechnung der Parkbahn wird bevorzugt die momentane Position des Kraftfahrzeugs relativ zur Parklücke berücksichtigt.

Es ist bevorzugt ein Mittelpunkt einer hinteren Achse des Kraftfahrzeugs, der als Referenzpunkt des Kraftfahrzeugs verwendet wird.

In bevorzugter Weise wird der Bereich für die Startposition des Kraftfahrzeugs derart bestimmt, dass von diesem Bereich aus eine solche Parkbahn für den Parkvorgang bestimmbar ist, bei welcher sich nach Durchfahren eines ersten Zuges ein vorbestimmter Längenbereich des Kraftfahrzeugs in der Parklücke befindet und/oder das Kraftfahrzeug nach Durchfahren einer vorbestimmten Anzahl von Zügen in die Parklücke eingeparkt wird. Zum Beispiel kann der Bereich für die Startposition derart bestimmt werden, dass aus diesem Bereich heraus eine solche Parkbahn berechnet werden kann, mit welcher sich nach Durchfahren des ersten Zuges der Referenzpunkt des Kraftfahrzeugs - vorzugsweise ein Mittelpunkt einer hinteren Achse des Kraftfahrzeugs - bereits in der Parklücke befindet. Dann kann das Kraftfahrzeug maximal in drei Zügen in die Parklücke eingeparkt werden.

Besonders bevorzugt wird der Bereich für die Startposition derart bestimmt, dass eine solche Parkbahn für den Parkvorgang berechnet werden kann, bei welcher sich nach Durchfahren eines ersten Zuges das gesamte Kraftfahrzeug in der Parklücke befindet und/oder das Kraftfahrzeug mit lediglich einem einzigen Zug in die Parklücke eingeparkt wird. Bei dieser Ausführungsform ist das vorbestimmte Kriterium, welchem die Parkbahn genügt, das einzügige Einparken in die Parklücke. Eine solche Vorgehensweise ist besonders benutzerfreundlich, denn das Kraftfahrzeug wird in die Parklücke mit lediglich einem Schritt eingeparkt, ohne die Fahrtrichtung des Kraftfahrzeugs wechseln zu müssen.

Besonders bevorzugt wird der Bereich für die Startposition derart bestimmt, dass eine solche Parkbahn für den Parkvorgang berechnet werden kann, welche eine Steigung kleiner als ein vorbestimmter Wert aufweist und bevorzugt noch für ein einzügiges Einparken sorgt. Dann wird erreicht, dass das Kraftfahrzeug nicht nur einzügig, das heißt ohne einen Fahrtrichtungswechsel, sondern auch entlang einer für den Fahrer gewöhnlichen und somit komfortablen Parkbahn in die Parklücke eingeparkt wird.

Das zumindest eine vorbestimmte Kriterium, welchem die Parkbahn genügt, kann ergänzend oder alternativ beinhalten, dass das Kraftfahrzeug innerhalb einer vorbestimmten Zeitdauer in die Parklücke eingeparkt wird und/oder die Länge der Parkbahn einen vorbestimmten Wert nicht überschreitet. Bei dieser Ausführungsform wird der Bereich für die Startposition also derart bestimmt, dass aus diesem Bereich heraus das Kraftfahrzeug innerhalb der vorbestimmten Zeitdauer und/oder entlang einer Parkbahn vorbestimmter Länge in die Parklücke eingeparkt wird. Der Fahrer kann sich bei dieser Ausführungsform darauf verlassen, dass das Kraftfahrzeug innerhalb einer vorbestimmten Zeit in die Parklücke eingeparkt wird.

Das zumindest eine vorbestimmte Kriterium, dem die Parkbahn genügt, kann auch eine Ausscherweite des Kraftfahrzeugs beim Einparken in die Parklücke betreffen. Zum Beispiel kann der Bereich für die Startposition derart bestimmt werden, dass aus diesem Bereich heraus die Ausscherweite unterhalb eines vorbestimmten Schwellwertes verbleibt, zum Beispiel kleiner als 1 m, bevorzugt kleiner als 0,5 m ist. Unter einer Ausscherweite wird vorliegend ein Abstand zwischen einem in Querrichtung einer an die Parklücke angrenzenden Fahrbahn von der Parklücke weitesten Punkt des Kraftfahrzeugs zu Beginn des Parkvorgangs und einem in Querrichtung der Fahrbahn während des Parkvorgangs von der Parklücke weitesten Punkt des Kraftfahrzeugs verstanden. Bei dieser Ausführungsform kann der Parkvorgang auch dann kollisionsfrei durchgeführt werden, wenn sich Hindernisse im Bereich des Kraftfahrzeugs befinden, nämlich auf der der Parklücke abgewandten Seite des Kraftfahrzeugs. Insbesondere kann der Parkvorgang auch beim Vorhandensein des Gegenverkehrs auf einer Straße kollisionsfrei durchgeführt werden. Eine sehr geringe Ausscherweite kann sich insbesondere dann ergeben, wenn das Kraftfahrzeug mit einem einzigen Zug in die Parklücke eingeparkt wird. Dann erübrigt sich nämlich der zweite Zug aus der Parklücke heraus, welcher für eine große Ausscherweite in der Regel ausschlaggebend ist.

Es hat sich als besonders vorteilhaft herausgestellt, wenn der Bereich für die Startposition durch eine bei der Vorbeifahrt des Kraftfahrzeugs an der Parklücke in Fahrtrichtung verlaufende - das heißt in Längsrichtung der Straße orientierte - erste Linie und eine gewinkelt zur ersten Linie verlaufende zweite Linie begrenzt ist. Die erste Linie kann am Rande der Straße beziehungsweise der Fahrbahn verlaufen. Der Parkvorgang kann also dann freigegeben werden, wenn der Referenzpunkt des Kraftfahrzeugs die gewinkelt zur Straße verlaufende zweite Linie passiert. Bei dieser Ausführungsform stellt/stellen die Position des Punktes, in welchem sich die erste Linie und die zweite Linie überschneiden, relativ zur Parklücke und/oder der Winkel zwischen der ersten und der zweiten Linie Einstellparameter dar, durch welche der Bereich für die Startposition bestimmt wird. Durch das Festlegen von der ersten und der zweiten Linie kann der Bereich ohne viel Rechenaufwand bestimmt werden, es muss lediglich der Winkel zwischen den Linien und/oder die Position des Punktes der Überschneidung der beiden Linien abhängig von der erfassten Parklücke - insbesondere abhängig von deren Breite - festgelegt werden.

Bevorzugt schließt die erste Linie mit der zweiten Linie einen Winkel in einem Wertebereich von 10° bis 90°, insbesondere einen Winkel aus einem Wertebereich von 40° bis 80°, ein. Bei dieser Ausführungsform verläuft die zweite Linie somit in einem Winkel aus einem Wertebereich von 40° bis 80° zur Längsachse der Fahrbahn, auf der sich das Kraftfahrzeug befindet. Je nach Position des Kraftfahrzeugs in der Querrichtung der Fahrbahn wird der Parkvorgang somit bei unterschiedlichen Positionen des Kraftfahrzeugs in Längsrichtung der Fahrbahn freigegeben. Befindet sich das Kraftfahrzeug in Querrichtung der Fahrbahn näher an der Parklücke beziehungsweise näher am Rande der Straße, so wird der Parkvorgang früher freigegeben, als wenn sich das Kraftfahrzeug in Querrichtung der Fahrbahn in einem größeren Abstand zur Parklücke befindet. Es wird somit sichergestellt, dass die Parkbahn, die aus dem Bereich für die Startposition heraus berechnet wird, nicht zu steil wird und somit für einen komfortablen Parkvorgang sorgt, wie auch für eine geringe Ausscherweite.

Schließt die erste Linie mit der zweiten Linie einen Winkel aus einem Wertebereich von 40° bis 80° ein, so wird auch sichergestellt, dass das Kraftfahrzeug bereits beim ersten Zug möglichst tief in die Parklücke eingefahren wird. Es kann somit wenigstens sichergestellt werden, dass der Mittelpunkt der hinteren Achse des Kraftfahrzeugs bereits nach dem ersten Zug in die Parklücke gelangt. Durch eine solche Anordnung der ersten und der zweiten Linie zueinander kann der Bereich für die Startposition die Form eines Parallelogramms einnehmen. Der Bereich für die Startposition wird bei dieser Ausführungsform auch durch eine dritte und eine vierte Linie begrenzt. Die dritte Linie verläuft bevorzugt parallel zur ersten Linie, wobei die vierte Linie vorzugsweise parallel zur zweiten Linie verläuft. Die Form eines Parallelogramms erweist sich insbesondere bei einer solchen Parksituation als besonders vorteilhaft, bei welcher - wie nachstehend geschildert - mehrere Parklücken an die Fahrbahn angrenzen und die Fahrerassistenzeinrichtung eine zweite Parklücke erkennt, während der Parkvorgang für die erste Parklücke freigegeben ist.

Erfindungsgemäß ist vorgesehen, dass dann, wenn nach der Vorbeifahrt des Kraftfahrzeugs an der genannten Parklücke sich das Kraftfahrzeug innerhalb des bestimmten Bereichs befindet und bei einer weiteren Fahrt des Kraftfahrzeugs eine weitere Parklücke durch die Sensoreinrichtung erfasst wird, das Freigeben des Parkvorgangs in die genannte - also die erste - Parklücke aufgehoben wird. Dann kann ein entsprechender Bereich für die Startposition des Kraftfahrzeugs bezüglich der weiteren Parklücke bestimmt werden, und der Parkvorgang in die weitere Parklücke kann dann freigegeben werden, wenn sich das Kraftfahrzeug innerhalb des neu bestimmten Bereichs befindet. Auf diesem Wege wird verhindert, dass der Fahrer zum Einparken in eine ursprünglich erkannte Parklücke dann gezwungen wird, wenn bei einer Weiterfahrt des Kraftfahrzeugs eine neue Parklücke durch die Sensoreinrichtung erkannt wird. Es wird darauf gewartet, bis der Referenzpunkt des Kraftfahrzeugs in den - für die neue Parklücke - neu berechneten Bereich gelangt, und der Parkvorgang in die neu erfasste Parklücke wird dann freigegeben, wenn der Referenzpunkt des Kraftfahrzeugs den neu berechneten Bereich erreicht. Dem Fahrer muss somit das Einparken in eine früher erfasste Parklücke nicht zugemutet werden, wenn die Fahrerassistenzeinrichtung eine neue Parklücke erfasst. Es werden somit gegebenenfalls längere Rückwärtsfahrten verhindert.

Das zumindest eine Kriterium, dem die Parkbahn genügen soll und nach welchem der Bereich für die Startposition bestimmt wird, kann fest vorgegeben werden, nämlich bereits in einem Entwicklungsprozess der Fahrerassistenzeinrichtung. Es hat sich jedoch als besonders vorteilhaft erwiesen, wenn das zumindest eine Kriterium abhängig von der erfassten Parklücke, nämlich vorzugsweise abhängig von deren Breite, situationsabhängig beziehungsweise parklückenspezifisch festgelegt wird. Es kann somit abhängig von der erfassten Parklücke situationsabhängig definiert werden, gemäß welchem Kriterium der Bereich zu bestimmen ist. Ist die Breite der erfassten Parklücke größer als ein vorbestimmter Grenzwert, so kann der Bereich für die Startposition derart bestimmt werden, dass aus diesem Bereich heraus das Kraftfahrzeug einzügig in die Parklücke eingeparkt werden kann. Ist die Breite der Parklücke kleiner als der Grenzwert, so kann der Bereich derart bestimmt werden, dass aus diesem Bereich heraus zumindest der Mittelpunkt der hinteren Achse des Kraftfahrzeugs nach durchfahren eines ersten Zuges des Parkvorgangs in die Parklücke gelangt. Es können somit in der Fahrerassistenzeinrichtung eine Vielzahl von Kriterien für das Bestimmen des Bereichs für die Startposition abgelegt sein, und die Steuereinrichtung kann abhängig von zumindest einer Eigenschaft der Parklücke - insbesondere von deren Breite - zumindest ein Kriterium auswählen, welchem die Parkbahn genügen soll. Wird als Kriterium zum Beispiel das "einzügige Einparken" ausgewählt, so wird der Bereich derart bestimmt, dass aus diesem Bereich heraus das Kraftfahrzeug einzügig in die Parklücke eingeparkt werden kann.

Eine erfindungsgemäße Fahrerassistenzeinrichtung ist zum Durchführen eines zumindest semi-autonomen Parkvorgangs eines Kraftfahrzeugs ausgebildet. Die Fahrerassistenzeinrichtung umfasst außerdem eine Steuereinrichtung zum Bestimmen einer Parkbahn für den Parkvorgang. Die Steuereinrichtung ist dazu ausgelegt, abhängig von einer erfassten Parklücke einen Bereich für eine Startposition für das Kraftfahrzeug zu bestimmen, von welchem aus eine Parkbahn bestimmbar ist, die zumindest einem vorbestimmten Kriterium genügt. Die Steuereinrichtung ist außerdem dazu ausgelegt, den Parkvorgang dann freizugeben, wenn sich ein vorbestimmter Referenzpunkt des Kraftfahrzeugs innerhalb des bestimmten Bereichs befindet.

Ein erfindungsgemäßes Fahrzeug, insbesondere ein Personenkraftwagen, umfasst eine erfindungsgemäße Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung sowie für das erfindungsgemäße Kraftfahrzeug.

Weitere Vorteile der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert. Es zeigen:
- Fig. 1: in schematischer Darstellung eine Draufsicht auf eine Parksituation, anhand deren ein Verfahren gemäß einer Ausführungsform der Erfindung näher erläutert wird;
- Fig. 2: in schematischer Darstellung eine Draufsicht auf die Parksituation gemäß Fig. 1, wobei ein Kraftfahrzeug in eine Querparklücke eingeparkt wird;
- Fig. 3: in schematischer Darstellung ein Flussdiagramm eines Verfahrens gemäß einer Ausführungsform der Erfindung; und
- Fig. 4: in schematischer Darstellung eine Draufsicht auf eine Parksituation, bei welcher zwei Parklücken hintereinander durch eine Sensoreinrichtung erfasst werden.

In den Figuren werden gleiche und funktionsgleiche Elemente mit den gleichen Bezugszeichen versehen.

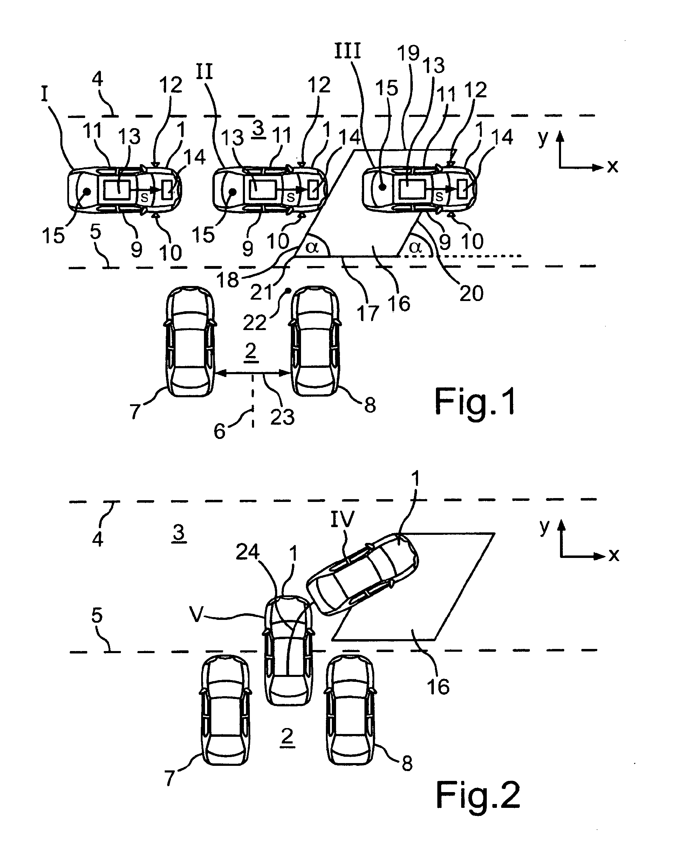

Fig. 1 zeigt in schematischer Darstellung eine Parksituation, bei welcher ein Personenkraftwagen 1 in eine Parklücke 2 rückwärts eingeparkt wird. Der Personenkraftwagen 1 befindet sich auf einer in x-Richtung befahrbaren Fahrbahn 3, die zum Beispiel eine Straße sein kann. Die Fahrbahn 3 ist seitlich jeweils durch eine gestrichelt dargestellte Begrenzungslinie 4, 5 begrenzt. An die Fahrbahn 3 grenzt die Parklücke 2 derart an, dass eine Längsachse 6 der Parklücke 2 in y-Richtung verläuft und somit senkrecht zu den Begrenzungslinien 4, 5 und auch senkrecht zu einer Längsachse der Fahrbahn 3 orientiert ist. Die Parklücke 2 ist seitlich jeweils durch ein Kraftfahrzeug 7, 8 unmittelbar begrenzt. Die Kraftfahrzeuge 7, 8 sind in zur Parklücke 2 benachbarte Parklücken eingeparkt, deren Längsachsen ebenfalls in y-Richtung orientiert sind.

Der Personenkraftwagen 1 stellt ein Kraftfahrzeug gemäß einer Ausführungsform der vorliegenden Erfindung dar. Der Personenkraftwagen 1 umfasst eine Fahrerassistenzeinrichtung, die einen an einer rechten Seitenflanke 9 des Personenkraftwagens 1 in seinem vorderen Bereich angebrachten ersten Ultraschallsensor 10 sowie einen an einer linken Seitenflanke 11 ebenfalls im vorderen Bereich des Personenkraftwagens 1 angebrachten zweiten Ultraschallsensor 12 umfasst. Die Ultraschallsensoren 10, 12 können zum Beispiel in jeweiligen Randbereichen eines vorderen Stoßfängers angebracht sein. Die Ultraschallsensoren 10, 12 sind Bestandteile einer Sensoreinrichtung der Fahrerassistenzeinrichtung.

Die Fahrerassistenzeinrichtung umfasst außerdem eine Steuereinrichtung 13, die Messdaten der Ultraschallsensoren 10, 12 empfangen und verarbeiten kann. Die Steuereinrichtung 13 kann auch Steuersignale S an eine Lenkvorrichtung 14 des Personenkraftwagens 1 ausgeben und somit die lenkbaren Räder des Personenkraftwagens 1 elektronisch einschlagen.

Die Fahrerassistenzeinrichtung ist im Ausführungsbeispiel zum Durchführen eines semi-autonomen Parkvorgangs des Personenkraftwagens 1 ausgebildet. Dies bedeutet, dass die Fahrerassistenzeinrichtung den Fahrer beim Rückwärtseinparken in die Parklücke 2 dahingehend unterstützen kann, dass der Fahrer lediglich Gas geben und bremsen muss. Das Einschlagen der lenkbaren Räder des Personenkraftwagens 1 übernimmt die Steuereinrichtung 13, nämlich abhängig von einer zuvor berechneten oder kontinuierlich geregelten Parkbahn.

Ein Verfahren gemäß einer Ausführungsform der Erfindung wird nachfolgend näher erläutert. In Fig. 1 ist der Personenkraftwagen 1 in drei unterschiedlichen Positionen I, II und III in x-Richtung gezeigt. Die Parklücke 2 wird durch den Ultraschallsensor 10 während einer Vorbeifahrt des Personenkraftwagens 1 an der Parklücke 2 erfasst. Die Erfassung der Parklücke 2 beginnt etwa in der Position I des Personenkraftwagens 1. Der Personenkraftwagen 1 fährt an der Parklücke 2 von der Position 1 zur Position II vorbei; während dieser Vorbeifahrt an der Parklücke 2 erfasst der erste Ultraschallsensor 10 die jeweiligen Entfernungen der Kraftfahrzeuge 7, 8 vom Ultraschallsensor 10. Auf diesem Wege kann auch die Position der Parklücke 2 relativ zum Personenkraftwagen 1 erfasst werden.

In der Position II des Personenkraftwagens 1 ist die Parklücke 2 durch den Ultraschallsensor 10 bereits erfasst, denn der Erfassungsbereich des Ultraschallsensors 10 hat die Front des Kraftfahrzeugs 8 erreicht. In der Steuereinrichtung 13 ist nun auch die jeweils momentane Position der Parklücke 2 relativ zu einem Referenzpunkt 15 des Personenkraftwagens 1 bekannt. Der Referenzpunkt 15 ist ein Mittelpunkt einer hinteren Achse des Personenkraftwagens 1.

In der in Fig. 1 mit II bezeichneten Position des Personenkraftwagens 1 wird der tatsächliche Parkvorgang in die Parklücke 2 noch nicht durch die Steuereinrichtung 13 freigegeben. Nachdem die Sensoreinrichtung die Parklücke 2 erfasst hat und die Position der Parklücke 2 relativ zum Referenzpunkt 15 bekannt ist, berechnet die Steuereinrichtung 13 einen Bereich 16 für eine Startposition des Personenkraftwagens 1, während der Fahrer mit dem Personenkraftwagen 1 in x-Richtung weiterfährt. Und zwar bestimmt die Steuereinrichtung 13 den Bereich 16 derart, dass dann, wenn sich der Referenzpunkt 15 innerhalb des Bereichs 16 befindet, der Personenkraftwagen 1 einzügig in die Parklücke 2 eingeparkt werden kann. Aus dem Bereich 16 heraus kann somit eine Parkbahn für den Personenkraftwagen 1 berechnet werden, die für das einzügige Einparken in die Parklücke 2 sorgt. Das einzügige Einparken bedeutet dabei, dass der Personenkraftwagen 1 in einem Zug beziehungsweise ohne einen Fahrtrichtungswechsel in die Parklücke 2 eingeparkt wird.

Der Bereich 16 für die Startposition des Personenkraftwagens 1 ist im Ausführungsbeispiel durch eine erste Linie 17, eine zweite Linie 18, eine dritte Linie 19 sowie eine vierte Linie 20 begrenzt. Der Bereich 16 weist im Ausführungsbeispiel die Form eines Parallelogramms auf. Die erste Linie 17 verläuft in x-Richtung, das heißt in Fahrtrichtung des Personenkraftwagens 1 bei der Vorbeifahrt an der Parklücke 2. Die dritte Linie 19 verläuft parallel zur ersten Linie 17. Die zweite Linie 18 schließt mit der ersten Linie 17 im Ausführungsbeispiel einen Winkel α von 45° ein. Die Einstellparameter zum Bestimmen des Bereichs 16 sind somit unter anderem der Winkel α, wie auch die Position eines Eckpunktes 21 des Bereichs 16, in welchem sich die erste Linie 17 mit der zweiten Linie 18 überschneidet, nämlich relativ zu einem Bezugspunkt 22 der Parklücke 2. Der Bezugspunkt 22 der Parklücke 2 ist dabei eine vordere rechte Ecke der Parklücke 2 beziehungsweise die vordere linke Ecke des Kraftfahrzeugs 8. Der Winkel α sowie die Position des Eckpunktes 21 relativ zum Bezugspunkt 22 werden abhängig von der erfassten Parklücke 2 festgelegt, nämlich vorzugsweise in Abhängigkeit von einer Breite 23 der Parklücke 2 beziehungsweise einem Abstand zwischen den Kraftfahrzeugen 7, 8. Der Winkel α sowie die Position des Eckpunktes 21 relativ zum Bezugspunkt 22 werden dabei im Ausführungsbeispiel derart festgelegt, dass der Personenkraftwagen 1 aus dem Bereich 16 heraus einzügig in die Parklücke 2 eingeparkt werden kann.

In der in Fig. 1 mit II bezeichneten Position des Personenkraftwagens 1 ist also der Parkvorgang noch nicht freigegeben. Die Steuereinrichtung 13 gibt den Parkvorgang erst dann frei, wenn der Referenzpunkt 15 des Personenkraftwagens in den Bereich 16 gelangt beziehungsweise die zweite Linie 18 des Bereichs 16 passiert. Dann ist nämlich sichergestellt, dass der Personenkraftwagen 1 einzügig in die Parklücke 2 eingeparkt werden kann. In der Position III befindet sich der Referenzpunkt 15 bereits im Bereich 16. Der Fahrer bekommt nun eine Information von der Fahrerassistenzeinrichtung, dass er den Personenkraftwagen 1 stoppen und den Parkvorgang beginnen kann. Die Steuereinrichtung 13 bestimmt eine Parkbahn, entlang welcher der Personenkraftwagen 1 rückwärts in die Parklücke 2 einzügig eingeparkt werden kann. Die Steuereinrichtung greift in die Lenkvorrichtung 14 ein, und der Fahrer gibt lediglich Gas und bremst. In einem solchen semi-autonomen Parkvorgang wird der Personenkraftwagen 1 in die Parklücke 2 eingeparkt.

In Fig. 2 sind weitere Positionen IV und V des Personenkraftwagens 1 dargestellt. Wie aus Fig. 2 hervorgeht, hat der Parkvorgang aus dem Bereich 16 heraus bereits begonnen; der Personenkraftwagen 1 fährt rückwärts in die Parklücke 2 hinein. Der Personenkraftwagen 1 überfährt dabei eine durch die Steuereinrichtung 13 bestimmte und in Fig. 2 mit 24 bezeichnete Parkbahn.

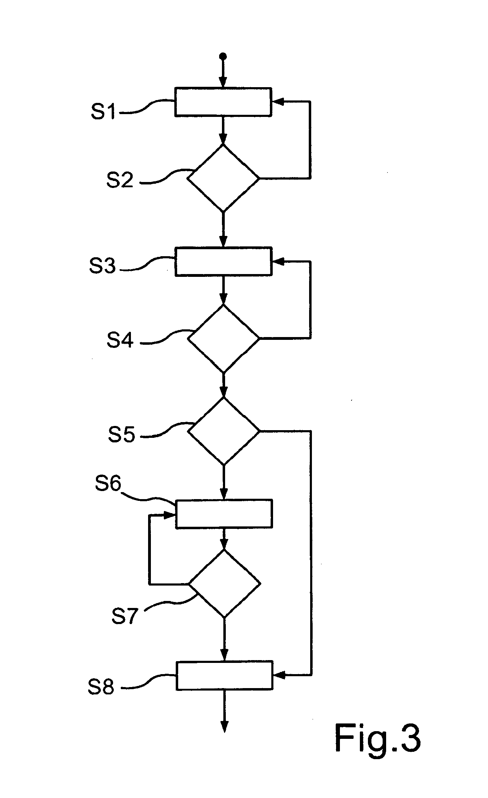

In Fig. 3 ist ein Flussdiagramm für ein Verfahren gemäß einer Ausführungsform der Erfindung dargestellt. In einem ersten Schritt S1 wird die Parklücke 2 mittels eines Ultraschallsensors 10 vermessen, das heißt die Fahrerassistenzeinrichtung versucht, die Parklücke 2 zu erkennen. In einem weiteren Schritt S2 überprüft die Steuereinrichtung 13, ob die Parklücke 2 bereits erkannt wurde oder nicht. Ist dies nicht der Fall, so kehrt das Verfahren zum Schritt S1 zurück, in welchem die Sensoreinrichtung 10, 12 weiter nach einer Parklücke sucht. Wird die Parklücke im Schritt S2 erkannt, so geht das Verfahren zu einem weiteren Schritt S3 über.

Im Schritt S3 versucht die Steuereinrichtung 13, irgendeine Parkbahn zu berechnen, die den Personenkraftwagen 1 in die Parklücke 2 führt. Im Schritt S4 überprüft die Steuereinrichtung 13, ob überhaupt eine Parkbahn für den Personenkraftwagen 1 berechenbar ist. Ist dies nicht der Fall, so kehrt das Verfahren zum Schritt S3 zurück. Kann überhaupt irgendeine Parkbahn berechnet werden, so geht das Verfahren zu einem weiteren Schritt S5 über.

Im Schritt S5 überprüft die Steuereinrichtung 13, ob eine solche Parkbahn für den Parkvorgang berechnet werden kann, mit welcher der Personenkraftwagen 1 in Parklücke 2 einzügig eingeparkt wird. Ist dies der Fall, so geht das Verfahren zu einem letzten Schritt S8 über, in welchem der Parkvorgang in die Parklücke 2 durch die Steuereinrichtung 13 freigegeben wird. Ist im Schritt S5 die Berechnung einer einzügigen Parkbahn nicht möglich, so bestimmt die Steuereinrichtung 13 den Bereich 16 für die Startposition des Personenkraftwagens 1. In einem Schritt S6 vergleicht die Steuereinrichtung 13 die Position des Referenzpunktes 15 in x-Richtung mit der Position der zweiten Linie 18 des Bereichs 16. Im Schritt S7 überprüft die Steuereinrichtung 13, ob der Referenzpunkt 15 des Personenkraftwagens 1 die zweite Linie 18 des Bereichs 16 erreicht hat oder nicht. Ist dies nicht der Fall, so kehrt das Verfahren zum Schritt S6 zurück. Gelangt der Referenzpunkt 15 in den Bereich 16, geht das Verfahren zum letzten Schritt S8 über, in welchem der Parkvorgang in die Parklücke 2 freigegeben wird.

Im Ausführungsbeispiel wurde von einem einzügigen Einparken als Kriterium für das Bestimmen des Bereichs 16 ausgegangen. Es können jedoch auch weitere Kriterien zugrunde gelegt werden. Ein solches kann zum Beispiel beinhalten, dass nach Durchfahren des ersten Zuges des Parkvorgangs zumindest der Referenzpunkt 15 des Personenkraftwagens 1 in die Parklücke 2 gelangt. Dieses Kriterium wird bevorzugt auch abhängig von der Breite 23 der Parklücke 2 situationsspezifisch festgelegt.

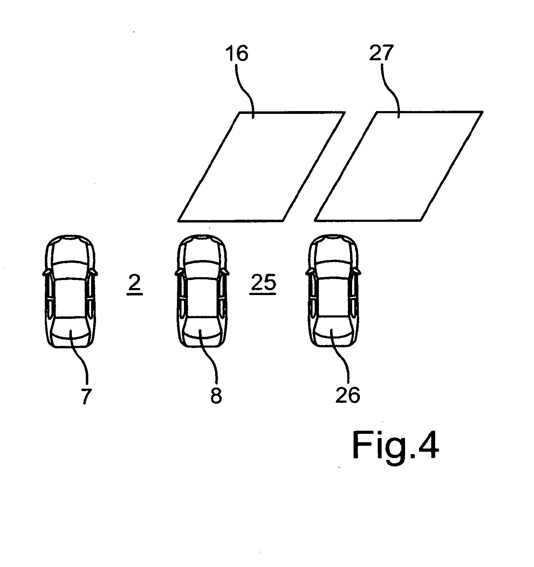

Bezug nehmend nun auf Fig. 4 wird eine Parksituation beschrieben, bei welcher der Ultraschallsensor 10 eine weitere Parklücke 25 erkennt, wenn der Parkvorgang in die Parklücke 2 bereits freigegeben ist. Der Übersicht halber wurde in Fig. 4 auf die Darstellung des Personenkraftwagens 1 verzichtet. Befindet sich der Referenzpunkt 15 im Bereich 16, so ist der Parkvorgang in die Parklücke 2 freigegeben. Es kann jedoch vorkommen, dass der Fahrer mit dem Personenkraftwagen 1 trotzdem weiterfährt. Dann kann der Ultraschallsensor 10 eine weitere Parklücke 25 erkennen, die einerseits durch das Kraftfahrzeug 8 und andererseits durch ein weiteres Kraftfahrzeug 26 begrenzt ist. Erkennt die Fahrerassistenzeinrichtung die weitere Parklücke 25, so wird die Freigabe des Parkvorgangs in die Parklücke 2 aufgehoben. Die Steuereinrichtung 13 bestimmt dann einen weiteren Bereich 27, aus welchem heraus der Personenkraftwagen 1 in die weitere Parklücke 25 einzügig eingeparkt werden kann und/oder ein weiteres auf die Parkbahn bezogenes Kriterium erfüllt wird. Der Parkvorgang in die weitere Parklücke 25 wird dann freigegeben, wenn der Referenzpunkt 15 des Personenkraftwagens 1 in den weiteren Bereich 27 gelangt. Auf diesem Wege wird verhindert, dass der Personenkraftwagen 1 dann in die Parklücke 2 eingeparkt wird, wenn bereits eine neue Parklücke durch die Fahrerassistenzeinrichtung erkannt wurde. Dies ist für den Fahrer besonders komfortabel, denn es werden längere Rückwärtsfahrten vermieden, und der Fahrer muss keine zu lange Parkbahn überfahren, um in eine Parklücke einzuparken.

Insgesamt werden also ein Verfahren sowie eine Fahrerassistenzeinrichtung bereitgestellt, bei welchem und mit welcher ein besonders benutzerfreundliches Einparken in eine Parklücke 2, 25 ermöglicht wird. Wird die Parklücke 2, 25 erkannt, so wird der Parkvorgang nicht sofort freigegeben. Es wird zunächst ein Bereich 16, 27 bestimmt, aus welchem heraus eine solche Parkbahn 24 für den Parkvorgang berechenbar ist, die zumindest einem vorbestimmten Kriterium genügt. Zum Beispiel wird ein solcher Bereich 16, 27 für die Startposition bestimmt, aus welchem heraus der Personenkraftwagen 1 in die Parklücke 2, 25 einzügig eingeparkt wird. Es sind aber auch weitere Kriterien möglich, wie zum Beispiel ein solches, nach welchem nach Durchfahren eines ersten Zuges des Parkvorgangs zumindest der Referenzpunkt 15 in die Parklücke 2, 25 gelangt. Der Parkvorgang wird durch die Steuereinrichtung 13 erst dann freigegeben, wenn sich der Referenzpunkt 15 des Personenkraftwagens 1 innerhalb des bestimmten Bereichs 16, 27 befindet.

## Patentansprüche

1. Verfahren zum Durchführen eines zumindest semi-autonomen Parkvorgangs eines Kraftfahrzeugs (1) rückwärts in eine Querparklücke (2, 25) mittels einer Fahrerassistenzeinrichtung, mit den Schritten:
- Erfassen einer Parklücke (2, 25) durch eine Sensoreinrichtung (10, 12) der Fahrerassistenzeinrichtung während einer Vorbeifahrt des Kraftfahrzeugs (1) an der Parklücke (2, 25),
- Bestimmen eines Bereichs (16, 27) für eine Startposition für das Kraftfahrzeug (1), von welchem aus eine Parkbahn (24), die zumindest einem vorbestimmten Kriterium genügt, bestimmbar ist, durch eine Steuereinrichtung (13) der Fahrerassistenzeinrichtung abhängig von der erfassten Parklücke (2, 25), und
- Freigeben des Parkvorgangs dann, wenn sich ein vorbestimmter Referenzpunkt (15) des Kraftfahrzeugs (1) innerhalb des bestimmten Bereichs (16, 27) befindet,
**dadurch gekennzeichnet, dass**
dann, wenn nach der Vorbeifahrt des Kraftfahrzeugs (1) an der genannten Parklücke (2) sich der Referenzpunkt (15) innerhalb des bestimmten Bereichs (16) befindet und bei einer Weiterfahrt des Kraftfahrzeugs (1) eine weitere Parklücke (25) durch die Sensoreinrichtung (10, 12) erfasst wird, das Freigeben des Parkvorgangs in die genannte Parklücke (2) aufgehoben wird, ein entsprechender Bereich (27) für die Startposition des Kraftfahrzeugs (1) bezüglich der weiteren Parklücke (25) bestimmt wird und der Parkvorgang in die weitere Parklücke (25) dann freigegeben wird, wenn sich das Kraftfahrzeug (1) innerhalb des neu bestimmten Bereichs (27) befindet.

2. Verfahren nach Anspruch 1,
**dadurch gekennzeichnet, dass**
der Bereich (16, 27) für die Startposition derart bestimmt wird, dass von diesem Bereich (16, 27) aus eine solche Parkbahn (24) für den Parkvorgang bestimmbar ist, bei welcher sich nach Durchfahren eines ersten Zuges ein vorbestimmter Längenbereich des Kraftfahrzeugs (1) in der Parklücke (2, 25) befindet und/oder das Kraftfahrzeug (1) nach Durchfahren einer vorbestimmten Anzahl von Zügen in die Parklücke (2, 25) eingeparkt wird.

3. Verfahren nach Anspruch 1 oder 2,
**dadurch gekennzeichnet, dass**
der Bereich (16, 27) für die Startposition derart bestimmt wird, dass von diesem Bereich (16, 27) aus eine solche Parkbahn (24) für den Parkvorgang bestimmbar ist, bei welcher sich nach Durchfahren eines ersten Zuges das gesamte Kraftfahrzeug (1) in der Parklücke (2, 25) befindet und/oder das Kraftfahrzeug (1) einzügig in die Parklücke (2, 25) eingeparkt wird.

4. Verfahren nach einem der vorhergehenden Ansprüche,
**dadurch gekennzeichnet, dass**
der Bereich (16, 27) für die Startposition derart bestimmt wird, dass von diesem Bereich (16, 27) aus eine solche Parkbahn (24) für den Parkvorgang bestimmbar ist, bei welcher eine Ausscherweite des Kraftfahrzeugs (1) bei dem Parkvorgang unterhalb eines vorbestimmten Schwellwerts verbleibt.

5. Verfahren nach einem der vorhergehenden Ansprüche,
**dadurch gekennzeichnet, dass**
der Bereich (16, 27) für die Startposition derart bestimmt wird, dass von diesem Bereich (16, 27) aus eine solche Parkbahn (24) für den Parkvorgang bestimmbar ist, bei welcher das Kraftfahrzeug (1) innerhalb einer vorbestimmten Zeitdauer in die Parklücke (2, 25) eingeparkt wird.

6. Verfahren nach einem der vorhergehenden Ansprüche,
**dadurch gekennzeichnet, dass**
der Bereich (16, 27) für die Startposition durch eine bei der Vorbeifahrt des Kraftfahrzeugs (1) an der Parklücke (2, 25) in Fahrtrichtung (x-Richtung) verlaufende erste Linie (17) und eine gewinkelt zur ersten Linie (17) verlaufende zweite Linie (18) begrenzt ist.

7. Verfahren nach Anspruch 6,
**dadurch gekennzeichnet, dass**
die erste Linie (17) mit der zweiten Linie (18) einen Winkel (α) aus einem Wertebereich von 10° bis 90°, insbesondere einen Winkel (α) aus einem Wertebereich von 40° bis 80°, einschließt.

8. Verfahren nach einem der vorhergehenden Ansprüche,
**dadurch gekennzeichnet, dass**
der Bereich (16, 27) für die Startposition die Form eines Parallelogramms aufweist.

9. Verfahren nach einem der vorhergehenden Ansprüche,
**dadurch gekennzeichnet, dass**
der Bereich (16, 27) so bestimmt wird, dass je nach Position des Kraftfahrzeugs (1) in der Querrichtung der Fahrbahn der Parkvorgang bei unterschiedlichen Positionen des Kraftfahrzeugs (1) in Längsrichtung der Fahrbahn freigegeben wird, und wenn sich das Kraftfahrzeug (1) in Querrichtung der Fahrbahn näher an der Parklücke (2, 25) beziehungsweise näher am Rande der Straße befindet, der Parkvorgang früher freigegeben wird, als wenn sich das Kraftfahrzeug (1) in Querrichtung der Fahrbahn in einem größeren Abstand zur Parklücke befindet.

10. Verfahren nach einem der vorhergehenden Ansprüche,
**dadurch gekennzeichnet, dass**
das zumindest eine Kriterium abhängig von der erfassten Parklücke (2, 25), insbesondere von deren Breite (23), festgelegt wird.

11. Fahrerassistenzeinrichtung zum Durchführen eines zumindest semi-autonomen Parkvorgangs eines Kraftfahrzeugs (1) rückwärts in eine Querparklücke (2, 25), mit einer Sensoreinrichtung (10, 12) zum Erfassen einer Parklücke (2, 25) während einer Vorbeifahrt des Kraftfahrzeugs (1) an der Parklücke (2, 25) und mit einer Steuereinrichtung (13) zum Bestimmen einer Parkbahn (24) für den Parkvorgang, die Steuereinrichtung (13) dazu ausgelegt ist,
- abhängig von der erfassten Parklücke (2, 25) einen Bereich (16, 27) für eine Startposition für das Kraftfahrzeug (1) zu bestimmen, von welchem aus eine Parkbahn (24) bestimmbar ist, die zumindest einem vorbestimmten Kriterium genügt, und
- den Parkvorgang dann freizugeben, wenn sich ein vorbestimmter Referenzpunkt (15) des Kraftfahrzeugs (1) innerhalb des bestimmten Bereichs (16, 27) befindet
**dadurch gekennzeichnet, dass**
die Steuereinrichtung (13) dazu ausgelegt ist, dass dann, wenn nach der Vorbeifahrt des Kraftfahrzeugs (1) an der genannten Parklücke (2) sich der Referenzpunkt (15) innerhalb des bestimmten Bereichs (16) befindet und bei einer Weiterfahrt des Kraftfahrzeugs (1) eine weitere Parklücke (25) durch die Sensoreinrichtung (10, 12) erfasst wird, das Freigeben des Parkvorgangs in die genannte Parklücke (2) aufgehoben wird, ein entsprechender Bereich (27) für die Startposition des Kraftfahrzeugs (1) bezüglich der weiteren Parklücke (25) bestimmt wird und der Parkvorgang in die weitere Parklücke (25) dann freigegeben wird, wenn sich das Kraftfahrzeug (1) innerhalb des neu bestimmten Bereichs (27) befindet.

12. Kraftfahrzeug (1) mit einer Fahrerassistenzeinrichtung nach Anspruch 11.

## Claims

1. Method for executing an at least semi-autonomous parking process of a motor vehicle (1), rearward into a transverse parking space (2, 25) by means of a driver assistance device, having the steps:
- detecting a parking space (2, 25) by means of a sensor device (10, 12) of the driver assistance device while the motor vehicle (1) is driving past the parking space (2, 25),
- determining a region (16, 27) for a starting position for the motor vehicle (1) from which a parking path (24), which satisfies at least one predetermined criterion, can be determined, by means of a control device (13) of the driver assistance device as a function of the detected parking space (2, 25), and
- enabling the parking process when a predetermined reference point (15) of the motor vehicle (1) is inside the determined region (16, 17),
**characterized in that**,
when the reference point (15) is located inside the determined region (16) after the motor vehicle (1) has driven past the specified parking space (2), and when a further parking space (25) is detected by the sensor device (10, 12) as the motor vehicle (1) continues to drive past, the enabling of the parking process into the specified parking space (2) is cancelled, a corresponding region (27) for the starting position of the motor vehicle (1) with respect to the further parking space (25) is determined, and the parking process into the further parking space (25) is enabled when the motor vehicle (1) is located inside the newly determined region (27).

2. Method according to Claim 1,
**characterized in that**
the region (16, 27) for the starting position is determined in such a way that from this region (16, 27) it is possible to determine a parking path (24) for the parking process which is such that after a first manoeuvre has been carried out, a predetermined length region of the motor vehicle (1) is located in the parking space (2, 25) and/or after a predetermined number of manoeuvres have been carried out, the motor vehicle (1) is parked in the parking space (2, 25).

3. Method according to Claim 1 or 2,
**characterized in that**
the region (16, 27) for the starting position is determined in such a way that from this region (16, 27) it is possible to determine a parking path (24) for the parking process which is such that after a first manoeuvre has been carried out, the entire motor vehicle (1) is located in the parking space (2, 25) and/or the motor vehicle (1) is parked in the parking space (2, 25) with one manoeuvre.

4. Method according to one of the preceding claims, **characterized in that**
the region (16, 27) for the starting position is determined in such a way that from this region (16, 27) it is possible to determine a parking path (24) for the parking process which is such that a veering-out width of the motor vehicle (1), during the parking process, remains below a predetermined threshold value.

5. Method according to one of the preceding claims, **characterized in that**
the region (16, 27) for the starting position is determined in such a way that from this region (16, 27) it is possible to determine a parking path (24) for the parking process which is such that the motor vehicle (1) is parked into the parking space (2, 25) within a predetermined time period.

6. Method according to one of the preceding claims, **characterized in that**
the region (16, 27) for the starting position is limited by a first line (17) which runs in the direction of travel (x direction) when the motor vehicle (1) drives past the parking space (2, 25), and by a second line (18) which runs at an angle to the first line (17).

7. Method according to Claim 6,
**characterized in that**
the first line (17) includes with the second line (18) an angle (α) composed of a value range from 10° to 90°, in particular an angle (α) composed of a value range from 40° to 80°.

8. Method according to one of the preceding claims, **characterized in that**
the region (16, 27) for the starting position is in the form of a parallelogram.

9. Method according to one of the preceding claims, **characterized in that**
the region (16, 27) is determined in such a way that depending on the position of the motor vehicle (1) in the transverse direction of the carriageway, the parking process is enabled in the longitudinal direction of the carriageway at different positions of the motor vehicle (1), and if the motor vehicle (1) is located closer to the parking space (2, 25) or closer to the edge of the road in the transverse direction of the carriageway, the parking process is enabled earlier than if the motor vehicle (1) is located at a relatively large distance from the parking space in the transverse direction of the carriageway.

10. Method according to one of the preceding claims, **characterized in that**
the at least one criterion is defined as a function of the detected parking space (2, 25), in particular of the width (23) thereof.

11. Driver assistance device for carrying out an at least semi-autonomous parking process of a motor vehicle (1), rearward into a transverse parking space (2, 25) having a sensor device (10, 12) for detecting a parking space (2, 25) while the motor vehicle (1) is driving past the parking space (2, 25), and having a control device (13) for determining a parking path (24) for the parking process, the control device (13) being configured,
- to determine, as a function of the detected parking space (2, 25), a region (16, 27) for a starting position for the motor vehicle (1), from which region it is possible to determine a parking path (24) which satisfies at least one predetermined criterion, and
- to enable the parking process when a predetermined reference point (15) of the motor vehicle (1) is located inside the determined region (16, 27),
**characterized in that**
the control device (13) is configured such that when the reference point (15) is located inside the determined region (16) after the motor vehicle (1) has driven past the specified parking space (2) and a further parking space (25) is detected by the sensor device (10, 12) when the motor vehicle has continued to drive past, the enabling of the parking process into the specified parking space (2) is cancelled, a corresponding region (27) for the starting position of the motor vehicle (1) with respect to the further parking space (25) is determined and the parking process into the further parking space (25) is enabled if the motor vehicle (1) is located inside the newly determined region (27).

12. Motor vehicle (1) having a driver assistance device according to Claim 11.

## Revendications

1. Procédé pour exécuter une manoeuvre de stationnement au moins semi-autonome d'un véhicule automobile (1) en marche arrière dans un emplacement de stationnement transversal (2, 25) à l'aide d'un dispositif d'assistance au conducteur, comprenant les étapes suivantes :
- détection d'un emplacement de stationnement (2, 25) par un dispositif de détection (10, 12) du dispositif d'assistance au conducteur pendant un passage du véhicule automobile (1) à côté de l'emplacement de stationnement (2, 25),
- définition d'une zone (16, 27) pour une position de départ pour le véhicule automobile (1), à partir de laquelle il est possible de définir une trajectoire de stationnement (24) qui satisfait à au moins un critère prédéfini, par un dispositif de commande (13) du dispositif d'assistance au conducteur en fonction de l'emplacement de stationnement (2, 25) détecté, et
- validation de la manoeuvre de stationnement lorsqu'un point de référence (15) prédéfini du véhicule automobile (1) se trouve à l'intérieur de la zone (16, 27) définie,
**caractérisé en ce que**
si après le passage du véhicule automobile (1) à côté dudit emplacement de stationnement (2), le point de référence (15) se trouve à l'intérieur de la zone (16) définie et, lorsque le véhicule automobile (1) poursuit son déplacement, un emplacement de stationnement supplémentaire (25) est détecté par le dispositif de détection (10, 12), la validation de la manoeuvre de stationnement dans ledit emplacement de stationnement (2) est alors annulée, une zone (27) correspondante est définie pour la position de départ du véhicule automobile (1) par rapport à l'emplacement de stationnement supplémentaire (25) et la manoeuvre de stationnement dans l'emplacement de stationnement supplémentaire (25) est ensuite validée lorsque le véhicule automobile (1) se trouve à l'intérieur de la nouvelle zone définie (27).

2. Procédé selon la revendication 1, **caractérisé en ce que** la zone (16, 27) pour la position de départ est définie de telle sorte qu'il est possible de définir à partir de cette zone (16, 27) une trajectoire de stationnement (24) pour la manoeuvre de stationnement avec laquelle, après avoir parcouru un premier segment, une plage de longueur prédéfinie du véhicule automobile (1) se trouve dans l'emplacement de stationnement (2, 25) et/ou le véhicule automobile (1) est stationné dans l'emplacement de stationnement (2, 25) après avoir parcouru un nombre prédéfini de segments.

3. Procédé selon la revendication 1 ou 2, **caractérisé en ce que** la zone (16, 27) pour la position de départ est définie de telle sorte qu'il est possible de définir à partir de cette zone (16, 27) une trajectoire de stationnement (24) pour la manoeuvre de stationnement avec laquelle, après avoir parcouru un premier segment, l'ensemble du véhicule automobile (1) se trouve dans l'emplacement de stationnement (2, 25) et/ou le véhicule automobile (1) est stationné dans l'emplacement de stationnement (2, 25) d'une seule traite.

4. Procédé selon l'une des revendications précédentes, **caractérisé en ce que** la zone (16, 27) pour la position de départ est définie de telle sorte qu'il est possible de définir à partir de cette zone (16, 27) une trajectoire de stationnement (24) pour la manoeuvre de stationnement avec laquelle une largeur de déboîtement du véhicule automobile (1) demeure inférieure à une valeur de seuil prédéfinie lors de la manoeuvre de stationnement.

5. Procédé selon l'une des revendications précédentes, **caractérisé en ce que** la zone (16, 27) pour la position de départ est définie de telle sorte qu'il est possible de définir à partir de cette zone (16, 27) une trajectoire de stationnement (24) pour la manoeuvre de stationnement avec laquelle le véhicule automobile (1) est stationné dans l'emplacement de stationnement (2, 25) dans une durée prédéfinie.

6. Procédé selon l'une des revendications précédentes, **caractérisé en ce que** la zone (16, 27) pour la position de départ est délimitée par une première ligne (17) qui s'étend dans le sens du déplacement (direction x) lors du passage du véhicule automobile (1) à côté de l'emplacement de stationnement (2, 25) et une deuxième ligne (18) qui s'étend selon un certain angle par rapport à la première ligne (17).

7. Procédé selon la revendication 6, **caractérisé en ce que** la première ligne (17) forme avec la deuxième ligne (18) un angle (α) d'une plage de valeurs de 10° à 90°, notamment un angle (α) d'une plage de valeurs de 40° à 80°.

8. Procédé selon l'une des revendications précédentes, **caractérisé en ce que** la zone (16, 27) pour la position de départ présente la forme d'un parallélogramme .

9. Procédé selon l'une des revendications précédentes, **caractérisé en ce que** la zone (16, 27) est définie de telle sorte que suivant la position du véhicule automobile (1) dans le sens transversal de la voie de circulation, la manoeuvre de stationnement est validée avec des positions différentes du véhicule automobile (1) dans le sens longitudinal de la voie de circulation, et lorsque le véhicule automobile (1), dans le sens transversal de la voie de circulation, se trouve plus près de l'emplacement de stationnement (2, 25) ou plus près du bord de la route, la manoeuvre de stationnement est validée plus tôt que lorsque le véhicule automobile (1), dans le sens transversal de la voie de circulation, se trouve à une plus grande distance de l'emplacement de stationnement.

10. Procédé selon l'une des revendications précédentes, **caractérisé en ce qu'**au moins un critère est fixé en fonction de l'emplacement de stationnement (2, 25) détecté, notamment de sa largeur (23).

11. Dispositif d'assistance au conducteur destiné à exécuter une manoeuvre de stationnement au moins semi-autonome d'un véhicule automobile (1) en marche arrière dans un emplacement de stationnement transversal (2, 25), comprenant un dispositif de détection (10, 12) pour détecter un emplacement de stationnement (2, 25) pendant un passage du véhicule automobile (1) à côté de l'emplacement de stationnement (2, 25) et comprenant un dispositif de commande (13) pour définir une trajectoire de stationnement (24) pour la manoeuvre de stationnement, le dispositif de commande (13) étant conçu pour
- en fonction de l'emplacement de stationnement (2, 25) détecté, définir une zone (16, 27) pour une position de départ pour le véhicule automobile (1), à partir de laquelle il est possible de définir une trajectoire de stationnement (24) qui satisfait à au moins un critère prédéfini, et
- valider la manoeuvre de stationnement lorsqu'un point de référence (15) prédéfini du véhicule automobile (1) se trouve à l'intérieur de la zone (16, 27) définie,
**caractérisé en ce que**
le dispositif de commande (13) est conçu pour ce que, si après le passage du véhicule automobile (1) à côté dudit emplacement de stationnement (2), le point de référence (15) se trouve à l'intérieur de la zone (16) définie et, lorsque le véhicule automobile (1) poursuit son déplacement, un emplacement de stationnement supplémentaire (25) est détecté par le dispositif de détection (10, 12), la validation de la manoeuvre de stationnement dans ledit emplacement de stationnement (2) soit alors annulée, une zone (27) correspondante est définie pour la position de départ du véhicule automobile (1) par rapport à l'emplacement de stationnement supplémentaire (25) et la manoeuvre de stationnement dans l'emplacement de stationnement supplémentaire (25) est ensuite validée lorsque le véhicule automobile (1) se trouve à l'intérieur de la nouvelle zone définie (27).

12. Véhicule automobile (1) équipé d'un dispositif d'assistance au conducteur selon la revendication 11.
